# EUROPEAN PATENT SPECIFICATION

(11) **EP 3 926 920 B1**
(45) Date of publication and mention of the grant of the patent: **28.08.2024**
(21) Application number: 21177924.4
(22) Date of filing: 04.12.2017
(51) Int. Cl.: H04L 9/40, H04L 67/131, G06V 10/22

(54) **METHOD AND DEVICE FOR ALLOCATING AUGMENTED REALITY-BASED VIRTUAL OBJECTS**
VERFAHREN UND VORRICHTUNG ZUR ZUWEISUNG VON VIRTUELLEN OBJEKTEN AUF BASIS VON ERWEITERTER REALITÄT
PROCÉDÉ ET DISPOSITIF D'ATTRIBUTION D'OBJETS VIRTUELS BASÉS SUR LA RÉALITÉ AUGMENTÉE

(30) Priority: 13.12.2016 CN 201611146660
(43) Date of publication of application: 22.12.2021
(62) Divisional of application: 17881652.6
(73) Proprietor: Advanced New Technologies Co., Ltd., George Town, Grand Cayman KY1-9008 (KY)
(72) Inventor: DUAN, Qinglong, Hangzhou Zhejiang, 311121 (CN); CHEN, Guanhua, Hangzhou Zhejiang, 311121 (CN); JI, Jing, Hangzhou Zhejiang, 311121 (CN); CHENG, Jiahui, Hangzhou Zhejiang, 311121 (CN); YUAN, Lu, Hangzhou Zhejiang, 311121 (CN)
(74) Representative: Marks & Clerk LLP

(56) References cited:
- CN-A- 106 096 924
- US-A1- 2016 335 289
- 1: "Sammelbild-Aktion "PENNY dreht durch" war ein voller Erfolg: PENNY.de", 26 September 2011 (2011-09-26), XP055683117, Retrieved from the Internet <URL:https://www.penny.de/unternehmen/presse/presse-detail/article/sammelbild-aktion-penny-dreht-durch-war-ein-voller-erfolg/> [retrieved on 20200406]

## Description

### TECHNICAL FIELD

This application relates to the field of augmented reality (AR) technologies, in particular to a method and device for distributing an AR-based virtual object.

### BACKGROUND

With the development of the network technology, a variety of virtual object distribution methods have emerged. Taking the distribution of a virtual object in the form of "red packets" as an example, users can put electronic greeting cards, cash gifts, etc. into "red packets" and then distribute them to a certain user or to a group for all members of the group to receive. However, with the increasingly diverse distribution scenarios of virtual objects, how to increase interactivity and an entertaining value of distribution of virtual objects has become essential for improving user experience.

"Sammelbild-Aktion "PENNY dreht durch" war ein voller Erfolg: PENNY.de", (20110926), XP055683117 describes a competition involving stickers containing images of parts of different models of cars. The cars were awarded as prizes to participants who had collected enough of the appropriate stickers.

### SUMMARY

According to first and second aspects of the present disclosure there is provided a computer-implemented virtual object distribution method as defined in claim 1, a device as defined in claim 8 and a non-transitory computer-readable storage medium as defined in claim 11. Other preferred features are set out in the dependent claims

This application provides a method for distributing an augmented reality (AR)-based virtual object, applicable to an AR client, including:
in response to an image scanning operation of a user, performing real-time image scanning on an offline environment of the user;
initiating image identification with respect to a real scene image acquired by the scanning, acquiring an electronic certificate transmitted from an AR server when a preset pattern identifier is identified in the real scene image, and saving the acquired electronic certificate locally, wherein the electronic certificate is used for obtaining the virtual object;
determining whether a category count of the locally-saved electronic certificates reaches a predetermined threshold; and
if the category count of the locally-saved electronic certificates reaches the predetermined threshold, sending to the AR server a virtual object distribution request containing a plurality of electronic certificates having a category count equal to the predetermined threshold for the AR server to distribute the virtual object from a preset virtual object set to the user based on the virtual object distribution request.

This application further provides a method for distributing an augmented reality (AR)-based virtual object, applicable to an AR server, including:
when a user performs, using an AR client, real-time image scanning on an offline environment, determining whether a preset pattern identifier is identified in a real scene image acquired by the AR client;
if the preset pattern identifier is identified in the real scene image, transmitting to the AR client an electronic certificate, wherein the electronic certificate is used for obtaining a virtual object;
receiving an object distribution request sent by the AR client, wherein the object distribution request includes a plurality of electronic certificates for obtaining an object;
determining whether a category count of the electronic certificates contained in the object distribution request reaches a predetermined threshold; and
if the category count of the electronic certificates contained in the object distribution request reaches the predetermined threshold, distributing a virtual object from a preset virtual object set to the user based on a preset distribution rule.

This application further provides a device for distributing an augmented reality (AR)-based virtual object, applicable to an AR client, including:
a scanning module which performs real-time image scanning on an offline environment of a user, in response to an image scanning operation of the user;
an acquiring module which initiates image identification with respect to a real scene image acquired by the scanning, acquires an electronic certificate transmitted from an AR server when a preset pattern identifier is identified in the real scene image, and saves the acquired electronic certificate locally, wherein the electronic certificate is used for obtaining a virtual object;
a first determining module which determines whether a category count of the locally-saved electronic certificates reaches a predetermined threshold; and
a sending module which, when the category count of the locally-saved electronic certificates reaches the predetermined threshold, sends to the AR server a virtual object distribution request containing a plurality of electronic certificates having a category count equal to the predetermined threshold for the AR server to distribute the virtual object from a preset virtual object set to the user based on the virtual object distribution request.

This application further provides a device for distributing an augmented reality (AR)-based virtual object, applicable to an AR server, including:
a second determining module which determines whether a preset pattern identifier is identified in a real scene image acquired by the AR client, when a user performs, using an AR client, real-time image scanning on an offline environment;
a transmitting module which transmits to the AR client an electronic certificate, if the preset pattern identifier is identified in the real scene image, wherein the electronic certificate is used for obtaining a virtual object;
a second receiving module which receives an object distribution request sent by the AR client, wherein the object distribution request includes a plurality of electronic certificates for obtaining an object;
a third determining module which determines whether a category count of the electronic certificates contained in the object distribution request reaches a predetermined threshold; and
a distributing module which distributes a virtual object from a preset virtual object set to the user based on a preset distribution rule, if the category count of the electronic certificates contained in the object distribution request reaches the predetermined threshold.

This application discloses an interactive mode combining an online requirement of distributing a virtual object to a user based on the AR technology, and an offline image scanning operation performed by a user on an AR client. A user can perform, using the AR client, image scanning on an offline preset pattern identifier, to trigger an AR server to transmit to the AR client an electronic certificate for obtaining a virtual object, and receive, using the AR client, the electronic certificate transmitted by the AR server. When a category count of electronic certificates received by the user reaches a predetermined threshold, the user can obtain the permission of distributing the virtual object. The AR client can actively send to the AR server a virtual object distribution request containing a plurality of electronic certificates having a category count equal to the predetermined threshold. The AR server distributes an object from a preset virtual object set to the user, thereby significantly increasing interactivity and an entertaining value of distribution of virtual objects.

### BRIEF DESCRIPTION OF THE DRAWINGS

FIG. 1 is a processing flow chart of a method for distributing an AR-based virtual object according to an embodiment of this application;
FIG. 2 is a schematic diagram of an image scanning interface of an AR client according to an embodiment of this application;
FIG. 3 is a schematic diagram of an AR client scanning a preset pattern identifier to obtain a virtual blessing card according to an embodiment of this application;
FIG. 4 is a schematic diagram of an AR client displaying an acquired virtual blessing card according to an embodiment of this application;
FIG. 5 is another schematic diagram of an AR client displaying an acquired virtual blessing card according to an embodiment of this application;
FIG. 6 is a schematic diagram of an AR client displaying a distribution result of five-blessing red packets according to an embodiment of this application;
FIG. 7 is a logical block diagram of a device for distributing an AR-based virtual object according to an embodiment of this application;
FIG. 8 is a hardware structure diagram of an AR client hosting a device for distributing an AR-based virtual object according to an embodiment of this application;
FIG. 9 is a logical block diagram of another device for distributing an AR-based virtual object according to an embodiment of this application; and
FIG. 10 is a hardware structure diagram of an AR client hosting another device for distributing an AR-based virtual object according to an embodiment of this application.

### DETAILED DESCRIPTION OF THE INVENTION

This application aims to provide an interactive mode combining an online requirement of distributing a virtual object to a user based on augmented reality (AR) technology, and an offline image scanning operation performed by the user on an AR client.

During implementation, a user can actively perform, using the AR client, image scanning on an offline preset pattern identifier, to trigger an AR server to transmit to the AR client an electronic certificate for obtaining a virtual object, and receive, using the AR client, the electronic certificate transmitted by the AR server. When a category count of electronic certificates received by the user reaches a predetermined threshold, the user can obtain the permission of distributing the virtual object. The AR client can actively send to the AR server a virtual object distribution request containing a plurality of electronic certificates having a category count equal to the predetermined threshold. The AR server distributes an object from a preset virtual object set to the user, thereby significantly increasing interactivity and an entertaining value of distribution of virtual objects.

For example, if the above-mentioned virtual object is a "virtual red packet" in a red packet distribution scenario, a user can scan an offline preset pattern identifier using an AR client, to trigger an AR server to transmit to the AR client an electronic certificate for obtaining the red packet, and receive, using the AR client, the electronic certificate transmitted by the AR server. When a category count of electronic certificates received by the user reaches a predetermined threshold, the user can obtain the permission of distributing the red packet. The AR client can actively send to the AR server a red packet distribution request containing a plurality of electronic certificates having a category count equal to the predetermined threshold. The AR server distributes a red packet of a certain amount from a preset "red packet cash pool" to the user, thereby significantly increasing interactivity and an entertaining value of distribution of the red packets.

This application will be described below through specific embodiments in combination with specific application scenarios.

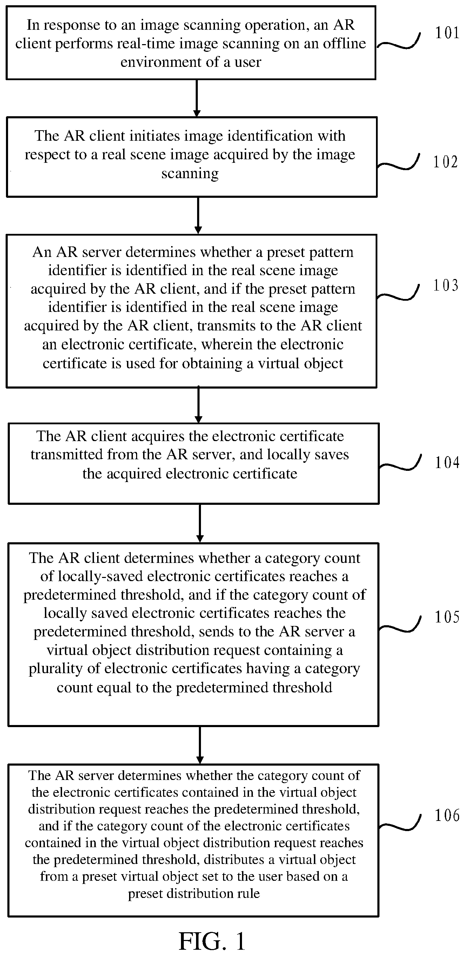

Referring to FIG. 1, which is a method for distributing an augmented reality-based virtual object provided by an embodiment of this application, the method includes the following steps:
step 101: in response to an image scanning operation, an AR client performs real-time image scanning on an offline environment of a user;
step 102: the AR client initiates image identification with respect to a real scene image acquired by the image scanning;
step 103: an AR server determines whether a preset pattern identifier is identified in the real scene image acquired by the AR client, and if the preset pattern identifier is identified in the real scene image acquired by the AR client, transmits to the AR client an electronic certificate for obtaining a virtual object;
step 104: the AR client acquires the electronic certificate transmitted from the AR server, and locally saves the acquired electronic certificate;
step 105: the AR client determines whether a category count of locally-saved electronic certificates reaches a predetermined threshold, and if the category count of locally saved electronic certificates reaches the predetermined threshold, sends to the AR server a virtual object distribution request containing a plurality of electronic certificates having a category count equal to the predetermined threshold; and
step 106: the AR server determines whether the category count of the electronic certificates contained in the virtual object distribution request reaches the predetermined threshold, and if the category count of the electronic certificates contained in the virtual object distribution request reaches the predetermined threshold, distributes a virtual object from a preset virtual object set to the user based on a preset distribution rule.

The above-mentioned AR client refers to client software developed based on the AR technology or integrated with AR functions. For example, the AR client may be an Alipay client with AR service functions; and the AR client is used for performing image scanning on the real scene in the offline environment, transmitting scanned image data to the AR server in real time, performing visual rendering on virtual data pushed by the AR server in a background through an AR engine in a foreground of the AR client, and superposing and integrating the virtual data with the scanned image data (such as real scene image) of the real scene.

The above-mentioned AR server includes a server providing services to the AR client, a server cluster, or a cloud platform built based on the server cluster. For example, the AR server may be a payment platform providing docking services for an Alipay Application (APP) with AR service functions. The AR server is used for identifying the image scanned by the AR client based on the AR engine in the background (Obviously, the image identification process may also be completed by the AR client based on the AR engine in the foreground), performing content management on virtual data related to offline business, and pushing the related virtual data to the AR client based on an result of the image identification. For example, the AR server may locally perform content management on the preset electronic certificates for obtaining virtual objects, and transmit the electronic certificates to the AR client based on the result of the image identification.

The above-mentioned virtual objects may include any type of virtual articles which can be distributed online. For example, in an illustrated implementation, the virtual objects may be "virtual red packets" in a red packet distribution scenario.

The above-mentioned electronic certificate may refer to a certificate for the user to obtain a virtual object from the AR server. In actual applications, the AR server may be preset with a certain number of different categories of electronic certificates and distribute different categories of electronic certificates to specific user groups according to a certain distribution rule. A specific form of the above-mentioned electronic certificates is not limited and may be a character string, a number, a character, a password, a virtual card, etc.

The above-mentioned preset pattern identifier may include any form of pattern identifier which is defined in advance on the AR server and has a binding relationship with the electronic certificates preset on the AR server for obtaining the virtual objects. In actual applications, those skilled in the art can customize the preset pattern identifier based on actual requirements.

The technical solution shown in steps 101-106 will be described in detail below by using "virtual red packets" as an example of the above-mentioned virtual objects.

Obviously, it is exemplary to use "virtual red packets" as an example of the above-mentioned virtual objects. In actual applications, other than "virtual red packets", the virtual objects may also be other virtual articles which can be distributed and transmitted online, such as electronic certificates, electronic retail vouchers, and electronic coupons.

In this embodiment, a certain number of different categories of electronic certificates can be preset on the AR server, and the preset electronic certificates are bound to a preset pattern identifier. The user can scan the offline preset pattern identifier using the AR client to trigger the AR server to transmit to the AR client an electronic certificate for obtaining the virtual object, and receive, using the AR client, the electronic certificate transmitted by the AR server.

When the category count of the electronic certificates received by the user reaches the predetermined threshold, the user can obtain the permission of distributing the red packets. The AR client can actively send to the AR server a red packet distribution request containing a plurality of electronic certificates having a category count equal to the predetermined threshold. The AR server distributes red packets of a certain amount from a preset "red packet cash pool" to the user, thereby significantly increasing interactivity and an entertaining value of distribution of the red packets.

For example, in a red packet distribution scenario of "Five Blessings Award" as shown, the above-mentioned electronic certificates may include five types of virtual blessing cards, namely "health blessing", "friendship blessing", "prosperity blessing", "family blessing" and "wealth blessing". The above-mentioned preset pattern identifier can be any type of pattern identifier with the word "blessing" in the offline environment of the user. The user can actively scan the pattern identifier with the word "blessing" in the offline environment using the AR client, to trigger the AR server to transmit the virtual blessing cards to the AR client, and receive the virtual blessing cards transmitted by the AR server through the AR client. After receiving the five types of virtual blessing cards, the user will correspondingly obtain the permission of receiving the red packets, and the AR server transmits a red packet to the user.

The technical solution shown in steps 101-106 will be described in detail below in the three stages of "receiving of an electronic certificate", "verification of category count of electronic certificates" and "distribution of a red packet".

### (1) "Receiving of An Electronic Certificate"

In an initial state, a certain number of different categories of electronic certificates can be preset on the AR server, and the preset electronic certificates are collectively managed by the AR server,
wherein the preset electronic certificates are the only certificate for the user to obtain the permission of distributing a red packet, and the number and category count of the preset electronic certificates can be set based on actual needs.

Besides the certain number of different categories of electronic certificates, a preset pattern identifier can also be predefined on the AR server, and the preset pattern identifier is bound to the preset electronic certificates.

When the user finds any form of preset pattern identifier in the offline environment, the user can perform image scanning on the preset pattern identifier through an image scanning function of the AR client to trigger the AR server to transmit an electronic certificate to the AR client, and receive, using the AR client, the electronic certificate transmitted by the AR server to obtain the permission of distributing a red packet.

In this embodiment, the AR client can provide a functional option of image scanning function to the user by default. For example, the functional option may specifically be a "scanning" function button provided for the user in a user homepage of the AR client. When the user needs to perform image scanning of the preset pattern identifier in the offline environment using the AR client, the user can trigger the functional option by "clicking" or other methods and then enter an image scanning interface of the AR client.

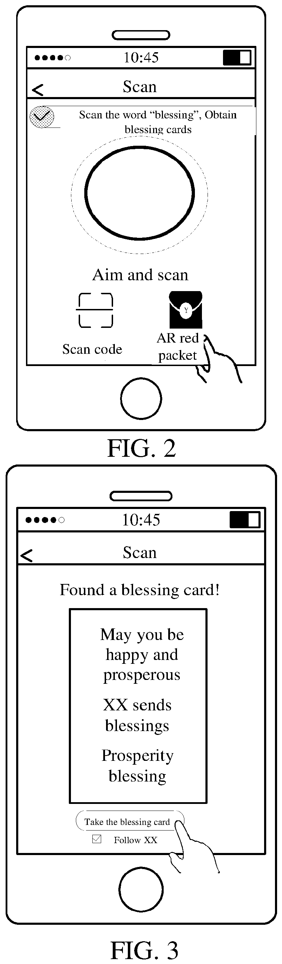

Referring to FIG. 2 which is a schematic diagram of the image scanning interface of the AR client according to the embodiment.

As shown in FIG. 2, in the above-mentioned image scanning interface of the AR client, in addition to providing to the user traditional function buttons such as "scan code", an "AR red packet" function button can also be provided. The user can trigger the function button by "clicking" or other methods, to trigger the AR client to enter the image scanning interface, and complete the image scanning operation of the preset pattern identifier in the offline environment of the user.

The image scanning interface may specifically be a real-time scanning interface. That is, a background picture of the image scanning interface can be a real scene picture of the user's local environment.

Referring back to FIG. 2, after the AR client enters the image scanning interface shown in FIG. 2, an image scanning prompt can be further displayed in the image scanning page.

The above-mentioned image scanning prompt may specifically include a dynamic scanning frame for prompting the user to perform image scanning on the offline environment, and a prompt text statically displayed in the image scanning page.

As shown in FIG. 2, the above-mentioned image scanning prompt may include a circular scanning frame which rotates dynamically at a center of the picture, and a prompt text of "aim and scan" statically and permanently displayed below the scanning frame.

The content of the prompt text can be dynamically updated in actual applications. For example, when the AR client scans the offline environment, the prompt text can be updated to "scanning"; and when the AR client fails to identify any offline target through a loaded image identification algorithm, resulting in a failure of this scanning, the prompt text can be updated to "please keep the lens stable", "try another place", or other similar text prompts prompting the user to scan again.

In this embodiment, after the AR client displays the image scanning prompt in the image scanning page, the AR client can use a camera mounted on an AR terminal unit (e.g., smart phone, or AR glasses) to perform real-time image scanning on the offline environment of the user, and initiate image identification on the scanned real scene image.

The AR client can perform image identification on the scanned real scene image based on an image identification model loaded on the AR client. Alternatively, the AR client can upload the scanned real scene image to the AR server in real time for the AR server to complete image identification based on an image identification model loaded on the server.

In one implementation, an image identification model may be locally loaded to an AR client, and, after scanning the real scene image of the offline environment of the target user using the camera of the AR terminal unit, the AR client can continue to conduct image identification on the real scene image based on the image identification model and upload an identification result to the AR server.

In another illustrated implementation, no image identification model is locally loaded to the AR client, and the AR client may upload the scanned real scene image to the AR server in real time. the AR server may perform image identification on the real scene image based on an image identification model loaded on the server, and then return the identification result to the AR client.

It should be noted that the image identification algorithm used in the image identification model is not particularly limited in this embodiment, and those skilled in the art can refer to records in relevant technologies when implementing the technical solution of this application. For example, in one implementation, the above-mentioned image identification model may be a depth learning model based on neural network training combined with a large number of image identification samples.

In this embodiment, after the image identification on the real scene image scanned by the AR client, the AR server can further confirm whether the above-mentioned preset pattern identifier is identified in the real scene image scanned by the AR client based on the identification result. If it is confirmed that the preset pattern identifier is successfully identified in the real scene image scanned by the AR client, then the AR server can transmit a corresponding electronic certificate to the user through the AR client from the preset electronic certificates.

In one illustrated implementation, when transmitting an electronic certificate to the AR client, the AR server can randomly transmit an electronic certificate from local preset electronic certificates to the AR client.

In one illustrated implementation, other than completely random distribution, the AR server may also transmit an electronic certificate to the AR client from the local preset electronic certificates based on a preset transmitting rule.

It should be noted that when transmitting an electronic certificate to the AR client, the AR server can directly transmit the electronic certificate to the AR client, or only transmit a unique identifier corresponding to the electronic certificate to the AR client, and save a correspondence between the unique identifier and the electronic certificate locally in the AR client. Subsequently, the AR client can identify the corresponding electronic certificate through the unique identifier.

For example, assuming that the electronic certificate is a virtual card, the server may directly transmit the virtual card to the AR client, or can generate a unique corresponding identifier for the virtual card and transmit the identifier to the AR client. After receiving the identifier, the AR client can render the identifier into the corresponding virtual card to be displayed locally based on the saved correspondence.

In actual applications, in order to prevent the electronic certificates from being counterfeited, the AR server can encrypt an electronic certificate through a preset encryption algorithm when transmitting the electronic certificate to the AR client. After receiving the encrypted electronic certificate, the AR client can decrypt the electronic certificate with a decryption key corresponding to the encryption algorithm. In this way, the electronic certificate can be prevented from being counterfeited by users.

In this embodiment, the category count of the electronic certificates transmitted by the AR server to the AR client may be smaller than the above predetermined threshold. That is, the number of types of the electronic certificates transmitted by the AR server to the AR client will be smaller than the above predetermined threshold.

For example, in the above-mentioned example, the electronic certificate is a visual card, and the user needs to receive five different types of virtual cards to obtain the permission of distributing a red packet. When the AR server transmits virtual cards to the AR client, the category count of the transmitted virtual cards may be a number less than five, such as three. In this way, a number of users with the permission of distributing a red packet can be effectively controlled.

In addition, it should be pointed out that the transmitting rule adopted by the server in transmitting an electronic certificate to the AR client can be customized according to actual needs.

In one illustrated implementation, the above-mentioned transmitting rule may include selective transmitting for a specific group of users.

In this case, the server can divide the locally-saved electronic certificates into a low-frequency transmission set and a high-frequency transmission set in advance. The electronic certificates in the low-frequency transmission set can be transmitted to specific users designated by the AR server, while the electronic certificates in the high-frequency transmission set can be transmitted to ordinary users.

In one illustrated implementation, the above-mentioned specific users may refer to users with high activity. When transmitting the electronic certificates, the AR server may give priority to transmitting the electronic certificates in the low-frequency transmission set to users with high activity, and give priority to transmitting electronic certificate in the high-frequency transmission set to ordinary users.

In this case, when transmitting an electronic certificate to a first user, the AR server can calculate an activity level of the user locally, and then compare the calculated activity level with a predetermined threshold to determine whether the user is an active user. If the activity level of the user reaches the predetermined threshold, the AR server can determine that the user is an active user, and in this case, the AR server can get a transmission certificate from the low-frequency transmission set and then transmit the same to the user through the AR client.

For example, in one implementation, when determining that the user is an active user, the AR server can only read an electronic certificate from the low-frequency transmission set and transmit the same to the user. In another implementation, when determining that the first user is an active user, the AR server can simultaneously read the electronic certificates from the low-frequency transmission set and the high-frequency transmission set and transmit the same to the first user, but in this case, it needs to ensure that the transmitted electronic certificates include at least one electronic certificate in the low-frequency transmission set. For ordinary users with a low activity level, the AR server can only transmit electronic certificates to the users from the high-frequency transmission set.

In this way, users with a high activity level can more easily obtain relatively "rare" electronic certificates, thus tilting the access rights of virtual objects to users with a high activity level.

It should be pointed out that when the AR server calculates an activity level of the user, the activity level can be characterized based on daily parameters related to the activities of the user. For example, in actual applications, the more friends a user has, or the more services being initiated, the more active the user is. Therefore, the above parameters may include parameters such as the number of friends of the user and the number of services initiated. When calculating the activity level of the user, the AR server can count the number of friends of the user or the number of services initiated by the user, and then determine whether the number reaches a threshold, so as to determine whether the user is an active user.

Obviously, in actual applications, the parameters characterizing an activity level of the user are not limited to the number of friends and the number of services initiated as described above, other parameters which can characterize the activity level of the user may also be used to calculate the activity level of the user during implementation.

In this embodiment, other than receiving an electronic certificate by scanning the preset pattern identifier in the offline environment through the AR client to trigger the AR server to transmit the electronic certificate to the AR client, in actual applications, the user can also receive an electronic certificate by acquiring an electronic certificate shared by other users through the same AR client.

For example, in an example of the above-mentioned electronic certificate being a visual card, the AR client may be an Alipay client with AR service functions. The Alipay client may provide a sharing interface, and other users can share the virtual cards to the user within the Alipay client through their own Alipay clients, or share the virtual cards to a third-party social platform or instant messaging software in the form of links or clickable pictures and texts through the sharing interface provided by the Alipay client. After receiving a virtual card shared by other users, the user can receive a virtual card shared by a second user and save the same locally by clicking on the links or pictures and texts and then jumping to an the interface of Alipay client.

In this embodiment, after obtaining an electronic certificate transmitted by the AR server by scanning a preset pattern identifier, the AR client can generate a corresponding display picture according to the electronic certificate, then perform visual rendering on the display picture based on an AR engine in a foreground of the AR client. The display picture will be superposed and integrated with the real scene image based on a position of the currently scanned preset pattern identifier in the real scene image, and be augmentatively displayed to the user. A receiving option will be outputted in the real scene image.

A specific mode of the above-mentioned augmentatively display is not specifically limited in this embodiment. For example, in one implementation, the display picture can be dynamically popped up and dynamically displayed starting from the position corresponding to the preset pattern identifier in the real scene image.

The above-mentioned receiving option may specifically be a function button for receiving the electronic certificate corresponding to the display picture. The user can trigger the function button by "clicking" or other methods to receive the electronic certificate corresponding to the display picture, add the generated display picture to a local display position corresponding to the electronic certificate, and then save the electronic certificate locally.

The display picture generated by the AR client for the electronic certificate may correspond to a category of the electronic certificate. That is, display pictures corresponding to different categories of electronic certificates are different from each other. The contents shown in the above-mentioned display picture is not particularly limited. Meanwhile, a display position provided by the AR client in a user interface can also correspond to the category of electronic certificates, and different display positions can respectively correspond to different categories of electronic certificates.

In addition, after adding the generated display picture to the corresponding display position, the AR client can also mark a number of the currently obtained electronic certificates corresponding to the display position on the display position. For example, a digital reminder may be generated in an upper right corner of the display position. Moreover, when the number of a certain type of electronic certificates changes, the AR client can also update the number marked on the display position corresponding to the electronic certificates based on an actual remaining number of the electronic certificates.

In this embodiment, a user can share the obtained electronic certificates with other users.

In one illustrated implementation, the user can share the electronic certificates corresponding to the display picture with other users by triggering the display picture added in the display position.

For example, when a user wants to share a certain type of electronic certificates, the user can trigger the display position corresponding to the electronic certificates by clicking or other methods. When the display position is triggered, the display picture corresponding to the display position can be displayed in the user interface.

In this case, a sharing option can be provided in the display picture. For example, when the electronic certificates are virtual cards, the sharing option can be a trigger option of "send one to a friend". After the user triggers the trigger option through a preset trigger operation such as clicking, the AR client can output a sharing mode selection interface in which several target applications which can be selected by the user can be provided. In this case, the user can select a corresponding target application in the selection interface, and then further select a target user to share this time in the target application. When the selection is completed, the AR client can transmit the electronic certificate to the target user selected by the user.

When a user shares an electronic certificate with a target user, if the target user is a contact or friend of the user in the AR client, the user can share the electronic certificate with the target user within the AR client. In this case, the AR client can transmit the electronic certificate to be shared to the AR client of the target user through the AR server.

Obviously, if the target user is not a contact or friend of the user in the AR client, but a contact or friend of the user in a third-party client, the user can also share the electronic certificate with the target user through the third-party client. In this case, the AR client can generate a corresponding access link for the electronic certificate to be shared through the AR server, and then share the generated access link to the target user through the third-party client.

### (2) "Verification of Category Count of Electronic Certificates"

In this embodiment, after the user receives the electronic certificates through the two receiving methods described above, the AR client can also determine in real time in the background whether the category count of the locally-saved electronic certificates reaches the predetermined threshold. If the predetermined threshold is reached, the user can obtain the permission of distributing a red packet; and in this case, the AR client can send a red packet distribution request (equivalent to the above virtual object distribution request) to the server, wherein a number of electronic certificates are contained in the red packet distribution request.

In one illustrated implementation, the number and the category count of the electronic certificates contained in the red packet distribution request can both be the above predetermined threshold, so that the server can obtain the electronic certificates contained in the red packet distribution request after receiving the red packet distribution request, and then verify the same.

It should be noted that the operation of the AR client to send the red packet distribution request to the AR server can be triggered manually by a user or can be triggered automatically by the AR client when determining that the category count of the received electronic certificates reaches a first number.

For example, in one case, when determining in the background that the number of the received electronic certificates reaches the first number, the AR client can automatically initiate the above red packet distribution request to the AR server. In another case, a trigger button for triggering the AR client to initiate an object distribution request to the AR server may be provided at the display position corresponding to the electronic certificates. When determining in the background that the number of the received electronic certificates reaches the predetermined threshold, the AR client can display a prompt to the user to remind the user that the user can currently obtain the permission of distributing a red packet, and then the AR client can send the red packet distribution request to the AR server in response to the trigger operation on the trigger button of the user.

In this embodiment, the AR server verifies the category count of the electronic certificates contained in the red packet distribution request sent by the AR client. If the AR server determines that the category count of the electronic certificates contained in the red packet distribution request reaches the predetermined threshold after verifying the electronic certificates contained in the red packet distribution request, the user can be granted the permission of distributing a red packet in this case, and a red packet of a certain amount is immediately distributed to the user from the preset "red packet cash pool" (equivalent to the above preset virtual object set) based on the preset distribution rule, or a red packet of a certain amount is distributed to the user from the preset "red packet cash pool" based on the preset distribution rule after a specified red packet distribution time is reached.

### (3) "Distribution of Red Packets"

In this embodiment, the distribution rule adopted by the AR server when distributing a red packet to a user from the preset "red packet cash pool" can be made based on actual business requirements.

In one illustrated implementation, the AR server can count a number of users who have been granted the permission of distributing a red packet, and calculate an average amount for the red packets to be distributed in the "red packet cash pool" based on the counted number of users. In this case, the calculated average amount is an amount of a red packet to be distributed to each user. In this case, the AR server can distribute a red packet of a corresponding amount from the "red packet cash pool" to each user based on the calculated average amount.

In another illustrated implementation, the AR server can also randomly draw a red packet of a certain amount for a user from the "red packet cash pool" when distributing the red packet to the user. For example, the AR server can calculate a random number for the user based on a preset randomization algorithm combined with the total amount of red packets to be distributed in the "red packet cash pool" and then distribute the red packet of a corresponding amount to the user according to the random number.

Obviously, in addition to the distribution rules shown above, other distribution rules can also be used in actual applications, and they will not be listed one by one in this application.

In this embodiment, after successfully distributing a red packet to a user, the AR server can also send a distribution result to the AR client where the user is located, and the AR client can display the distribution result to the user after receiving the distribution result.

The distribution result may include one or more of an amount of distributed red packets, a sender of the red packets, other receivers of the red packets, a number of other receivers, and a distribution rule of the red packets.

The technical solution in the above embodiment will be described in detail below with reference to specific application scenarios.

In a red packet distribution scenario of "Five Blessings Award" as shown, the AR client can be a payment client with AR service functions. The AR server can be a payment platform docking with an Alipay client with AR service functions. A virtual object set can refer to an enterprise fund account of an enterprise cooperating with the payment platform, and the funds under the enterprise fund account are the total amount of funds that the enterprise can use to distribute red packets to users.

The above-mentioned electronic certificates may include five types of virtual blessing cards, namely "health blessing", "friendship blessing", "prosperity blessing", "family blessing" and "wealth blessing". The above-mentioned preset pattern identifier can be any type of pattern identifier with the word "blessing" in the offline environment of a user.

The user can actively scan the pattern identifier with the word "blessing" in the offline environment using the AR client, trigger the AR server to transmit a virtual blessing card to the AR client, and receive, using the AR client, a virtual blessing card transmitted by the AR server. After receiving the five types of virtual blessing cards, the user will correspondingly obtain the permission of receiving a red packet, and the AR server may transmit the red packet to the user.

Among the above five types of virtual blessing cards, the payment platform can set a certain types, for example, two types, as "rare" virtual blessing cards. Whether such "rare" virtual blessing cards are distributed or not depends on an activity level of the user calculated by the payment platform based on user data. That is, such "rare" virtual cards can be preferentially distributed to users with a higher activity level. When distributing virtual blessing cards to ordinary users, the payment platform can only distribute two to three types of cards among the five types of virtual blessing cards, namely "health blessing", "friendship blessing", "prosperity blessing", "family blessing" and "wealth blessing", by default.

When finding a pattern identifier with the word "blessing" in the offline environment (such as a sticker with the word "blessing"), the user can perform image scanning on the pattern identifier with the word "blessing" through the image scanning function of the AR client to trigger the AR server to transmit a virtual blessing card to the AR client.

After the user completes the image scanning on the pattern identifier with the word "blessing" at the prompt of the image scanning prompt displayed in the image scanning interface as shown in FIG. 2, the AR client can initiate the image identification on the scanned real scene image. When the image identification is completed, the AR server can determine whether the pattern identifier with the word "blessing" is identified in the real scene image scanned by the AR client based on the identification result. If the pattern identifier with the word "blessing" is identified from the real scene image scanned by the AR client, the AR server can transmit a virtual blessing card to the user through the AR client.

Referring to FIG. 3, after obtaining a virtual blessing card transmitted by the AR server, the AR client can perform visual rendering on the virtual blessing card transmitted by the AR server based on the AR engine in the foreground of the AR client, superpose and integrate the virtual blessing card with the real scene image based on a position of the currently scanned pattern identifier with the word "blessing" in the real scene image, and augmentatively display it to the user (for example, as shown in FIG. 3, the AR server transmits a "prosperity blessing" virtual blessing card to the AR client). A "take the blessing card" function button may be displayed at a position corresponding to the AR virtual blessing card (for example, in a lower part of the screen shown in FIG. 3).

In this embodiment, a user can trigger the "accept blessing card" function button by "clicking" or other methods, and trigger the AR client to generate a corresponding display picture for the virtual card. Then the display picture may be displayed in an active interface. The contents on the display pictures generated by the client for different types of virtual cards are different from each other. The display positions provided by the client can correspond to the types of virtual cards one by one, and each type of virtual cards can correspond to one display position respectively.

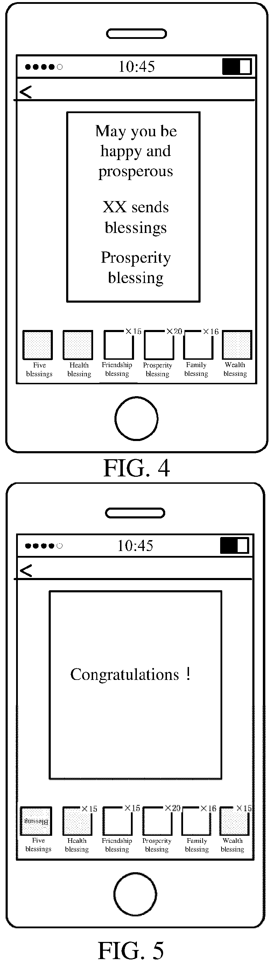

Referring to FIG. 4, the AR client can provide a display location for each of the five types of virtual blessing cards, namely "health blessing", "friendship blessing", "prosperity blessing", "family blessing" and "wealth blessing", in the user interface. After adding the display picture to the corresponding display position, the client can also mark a number of the currently obtained virtual cards at a preset position of the display position (for example, upper right corner as shown in FIG. 4). When the number of virtual cards corresponding to the display position changes, the client can also update the number.

When the user successfully receives all the five types of virtual cards, namely "health blessing", "friendship blessing", "prosperity blessing", "family blessing" and "wealth blessing", by acquiring the virtual cards transmitted by the payment platform and the virtual cards shared by other friends, the user obtains the permission of receiving a "Five Blessings" red packet.

Referring to FIG. 5, the AR client can also provide a display location for "Five Blessings" in the user interface. After the user successfully receives the five types of virtual cards, namely "health blessing", "friendship blessing", "prosperity blessing", "family blessing" and "wealth blessing", the display location of "five blessings" can be highlighted, for example, by color, to remind the user that the user currently has the right to receive a "Five Blessings" red packet.

After the user obtains the permission of receiving a "Five Blessings" red packet, the user can manually trigger the "Five Blessings" display position to trigger the client to send a red packet distribution request to the payment platform. Alternatively, the client can automatically send a red packet distribution request to the payment platform. In this case, the red packet distribution request may contain the five types of received virtual cards. After receiving the request, the payment platform can verify the types of the virtual cards in the request. If the payment platform determines that the request contains the five types of virtual cards after verification, the payment platform can immediately distribute a "red packet" of a certain amount to the user from the enterprise fund account of the cooperative enterprise, or send a "red packet" of a certain amount to the user after a distribution time is reached. For example, the payment platform can count the number of all users who obtain the permission of receiving the "five blessings" red packets, and then evenly distribute the amount of red packets available for distribution in the enterprise fund account.

After the user receives a "red packet", the payment platform can push a red packet distribution result to the client, and the client can display the distribution result to the user in the activity interface.

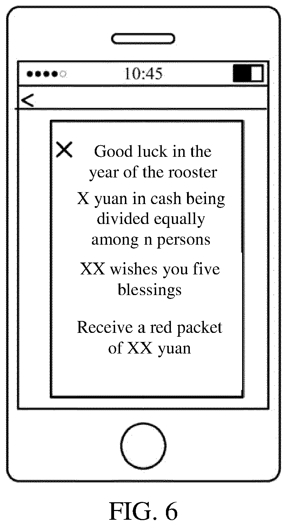

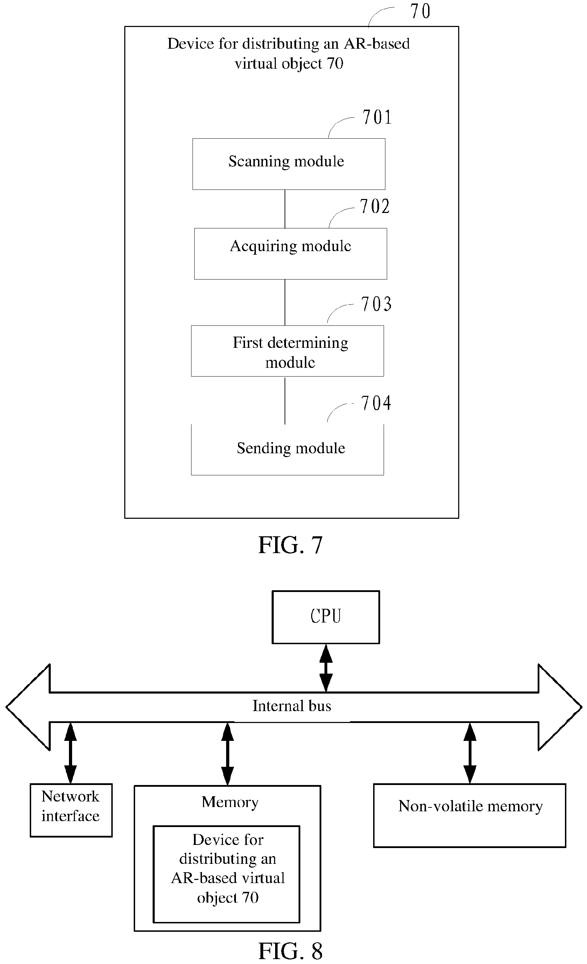

Referring to FIG. 6, information displayed in the red packet distribution result may include an amount received this time, a sender of the red packet this time (name of the enterprise cooperating with the payment platform), a total number of people receiving the "Five Blessings" red packet this time, a distribution rule of the "Five Blessings" red packet this time (the distribution rule shown in FIG. 7 is average distribution), etc.

Corresponding to the above-mentioned embodiment, this application also provides an embodiment of the device.

Referring to FIG. 7, this application provides a device 70 for distributing an AR-based virtual object, which is applicable to an AR client. Referring to FIG. 8, a hardware architecture involved in the AR client which hosts the device 70 for distributing an AR-based virtual object generally includes a CPU, a memory, a non-volatile memory, a network interface, and an internal bus, etc. Taking software implementation as an example, the device 70 for distributing an AR-based virtual object may be generally understood as a logic device which combines software and hardware formed after a computer program loaded in the memory is run by the CPU. The device 70 includes:
a scanning module 701 which performs real-time image scanning on an offline environment of a user, in response to an image scanning operation of the user;
an acquiring module 702 which initiates image identification with respect to a real scene image acquired by the scanning, acquires an electronic certificate transmitted from an AR server when a preset pattern identifier is identified in the real scene image, and saves the acquired electronic certificate locally, wherein the electronic certificate is used for obtaining a virtual object;
a first determining module 703 which determines whether a category count of locally-saved electronic certificates reaches a predetermined threshold; and
a sending module 704 which, when the category count of the locally saved electronic certificates reaches the predetermined threshold, sends to the AR server a virtual object distribution request containing a plurality of electronic certificates having a category count equal to the predetermined threshold for the AR server to distribute a virtual object from a preset virtual object set to the user based on the virtual object distribution request.

In this embodiment, the acquiring module 702 may:
perform image identification on the scanned real scene image based on a local image identification model, and send an acquisition request for acquiring the electronic certificate to the AR server when the preset pattern identifier is identified in the real scene image; and
acquire the electronic certificate transmitted from the AR server upon receiving the acquisition request.

In this embodiment, the acquiring module 702 may:
upload the scanned real scene image to the AR server for the AR server to perform image identification on the real scene image based on a local image identification model thereof; and
acquire an electronic certificate transmitted from the AR server upon the preset pattern identifier being identified in the real scene image.

In this embodiment, the acquiring module 702 may further:
acquire an electronic certificate shared by another user locally and locally save the acquired electronic certificate.

In this embodiment, the acquiring module 702 may further:
generate a corresponding display picture for the acquired electronic certificate;
augmentatively display the generated display picture at a position corresponding to the preset pattern identifier in the scanned real scene image, and display a receiving option corresponding to the display picture in the real scene image; and
in response to a trigger operation on the receiving option of the user, add the generated display picture to a local display position corresponding to the electronic certificate,
wherein display pictures generated for different categories of electronic certificates are different, and different categories of electronic certificates correspond to different display positions.

In this embodiment, the acquiring module 702 may further:
mark a number of the acquired electronic certificates on the display position; and
update the number based on an actual remaining number of the electronic certificates.

In this embodiment, the device may further include:
a sharing module 705 (not shown in FIG. 7) which, when detecting the preset trigger operation on any display picture of the user, enters a sharing page corresponding to a target user, wherein the sharing page includes a plurality of preset target applications; and shares the electronic certificate corresponding to the display picture to a third-party user designated by the user through the target application designated by the user in the sharing page.

In this embodiment, the device further may include:
a first receiving module 706 (not shown in FIG. 7) which receives a distribution result of the virtual objects sent by the server and display the distribution result to the user,
wherein the distribution result includes one or more of the following information:
   a number of the virtual objects, a sender of the virtual objects, a number of other receivers of the virtual objects, and a distribution rule of the virtual objects.

In this embodiment, the virtual object may be a virtual red packet.

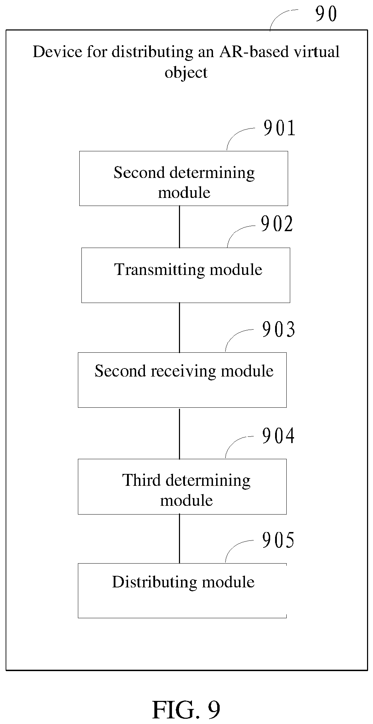

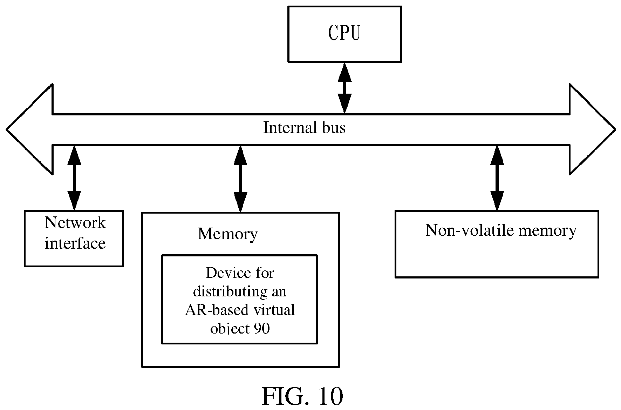

Referring to FIG. 9, this application provides a device 90 for distributing an AR-based virtual object, which is applicable to AR clients. Referring to FIG. 10, a hardware architecture involved in the AR client which hosts the device 90 for distributing an AR-based virtual object generally includes a CPU, a memory, a non-volatile memory, a network interface, and an internal bus, etc. Taking software implementation as an example, the device 90 for distributing an AR-based virtual object can be generally understood as a logic device which combines software and hardware formed after a computer program loaded in the memory is run by the CPU. The device 90 includes:
a second determining module 901 which, when a user performs, using an AR client, real-time image scanning on an offline environment, determines whether a preset pattern identifier is identified in the real scene image acquired by the AR client;
a transmitting module 902 which transmits to the AR client an electronic certificate, if the preset pattern identifier is identified in the real scene image, wherein the electronic certificate is used for obtaining a virtual object;
a second receiving module 903 which receives an object distribution request sent by the AR client, wherein the object distribution request contains a plurality of electronic certificates for obtaining an object;
a third determining module 904 which determines whether a category count of the electronic certificates contained in the object distribution request reaches a predetermined threshold; and
a distributing module 905 which distributes a virtual object from a preset virtual object set to the user based on a preset distribution rule, if the category count of the electronic certificates contained in the object distribution request reaches the predetermined threshold.

In this embodiment, the transmitting module 902 may:
randomly transmit an electronic certificate to the AR client from locally preset electronic certificates; or
according to a preset transmitting rule, transmit an electronic certificate to the AR client from locally preset electronic certificates.

In this embodiment, the category count of the electronic certificates transmitted by the AR server for the AR client may be smaller than the predetermined threshold.

In this embodiment, the locally preset electronic certificates are at least divided into a low-frequency transmission set and a high-frequency transmission set in advance; and
when transmitting the electronic certificate to the AR client from the locally preset electronic certificates according to the preset transmitting rule, the transmitting module 902 may be further configured to:
calculate an activity level of the user;
determine whether the activity level of the user reaches a predetermined threshold;
if the activity level of the user has reached the predetermined threshold, transmit an electronic certificate to the AR client from the low-frequency transmission set;
or, transmit electronic certificates to the AR client from the low-frequency transmission set and the high-frequency transmission set, wherein the transmitted electronic certificates include at least one electronic certificate in the low-frequency transmission set.

In this embodiment, the transmitting module 902 may further:
when the distribution of virtual objects for the user is completed, transmit a distribution result of the virtual objects to the AR client for the AR client to display the distribution result to the user;
wherein the distribution result includes one or more of the following information:
   a number of the virtual objects, a sender of the virtual objects, a number of other receivers of the virtual objects, and a distribution rule of the virtual objects.

In this embodiment, the virtual object may be a virtual red packet.

The apparatus embodiments substantially correspond to the method embodiments. Therefore, for related parts of the apparatus embodiments, reference will now be made in part to the description of the method embodiments. The apparatus embodiments described above are merely exemplary. The unit as illustrated by the separation member may or may not be physically separated, the component shown as a unit may or may not be a physical unit, may be located in one place or may be distributed on multiple network units. Some or all of the modules may be selected according to practical requirements to achieve the objectives of the present invention. A person of ordinary skill in the art may understand and implement the embodiments of the present invention without creative efforts.

The system, the apparatus, the module or the unit described in the foregoing embodiments can be specifically implemented by a computer chip or an entity or implemented by a product having a certain function. A typical implementation device is a computer, and the specific form of the computer may be a personal computer, a laptop computer, a cellular telephone, a camera phone, a smartphone, a personal digital assistant, a media player, a navigation device, an email transceiver device, a game console, a tablet computer, a wearable device, or a combination thereof.

Other embodiments of this application will be apparent to those skilled in the art from consideration of the specification and practice of the present application disclosed here. This application is intended to cover any variations, uses, or adaptations of this application following the general principles thereof and including such departures from this application as come within known or customary practice in the art. It is intended that the specification and examples be considered as exemplary only, with a true scope of this application being indicated by the following claims.

It will be appreciated that this application is not limited to the exact construction that has been described above and illustrated in the accompanying drawings, and that various modifications and changes can be made without departing from the scope thereof. It is intended that the scope of this application only be limited by the appended claims.

The foregoing descriptions are merely exemplary embodiments of this application, but are not intended to limit this application.

## Claims

1. A computer-implemented virtual object distribution method, comprising:
in response to an image scanning operation of a user, performing real-time image scanning to acquire a real scene image of an offline environment of the user;
identifying a pattern identifier in the image, the pattern identifier being a part of the offline environment and associated with an electronic certificate having a category of a plurality of categories, wherein the electronic certificates are used for obtaining a virtual object; j
after the pattern identifier being identified, acquiring a corresponding electronic certificate from a server;
displaying a plurality of pictures corresponding to the acquired electronic certificates by superposing and integrating the plurality of pictures with the real scene image of the offline environment, wherein each of the plurality of pictures is located at a position corresponding to the pattern identifier in the image of the offline environment, wherein each of the plurality of pictures corresponds to one of the plurality of categories;
determining whether a category count of acquired electronic certificates meets a threshold;
in response to determining that the category count meets the threshold, sending a request for the virtual object to the server; and
receiving, from the server, the virtual object.

2. The method of claim 1, further comprising:
before acquiring the real-scene image of the offline environment, displaying a prompt on a real-time scanning interface having a background picture that is a real scene image of the offline environment.

3. The method of claim 1 or 2, wherein each of the plurality of pictures includes a number of the acquired electronic certificates of a category that the picture corresponds to.

4. The method of claim 3, further comprising:
displaying a sharing button on a first picture of the plurality of pictures for sharing an acquired electronic certificate of the category that the first picture corresponds to; and
in response to a user input triggering the sharing button, displaying a sharing interface for the user to share the acquired electronic certificate of the category that the first picture corresponds to.

5. The method of claim 2, wherein the prompt includes a scanning frame and text prompting the user to acquire the real scene image of the offline environment.

6. The method of claim 5, further comprising: dynamically updating the text according to a result of identifying the pattern identifier in the image.

7. The method of any of claims 1-6, wherein the electronic certificate is a virtual card and the virtual object is a virtual packet of a monetary amount.

8. A device, comprising one or more processors and one or more non-transitory machine-readable memories coupled to the one or more processors and configured with instructions executable by the one or more processors to cause the device to perform operations comprising:
acquiring a real scene image of an offline environment of a user;
identifying a pattern identifier in the image, the pattern identifier being a part of the offline environment and associated with an electronic certificate having a category of a plurality of categories, wherein the electronic certificates are used for obtaining a virtual object;
after the pattern identifier being identified, acquiring the corresponding electronic certificate from a server;
displaying a plurality of pictures corresponding to the acquired electronic certificates by superposing and integrating the plurality of pictures with the real scene image of the offline environment, wherein each of the plurality of pictures is located at a position corresponding to the pattern identifier in the image of the offline environment, wherein each of the plurality of pictures corresponds to one of the plurality of categories;
determining whether a category count of acquired electronic certificates meets a threshold;
in response to determining that the category count meets the threshold, sending a request for the virtual object to the server; and
receiving, from the server, the virtual object.

9. The device of claim 8, wherein the operations further comprise:
before acquiring the image of the offline environment, displaying a prompt on a real-time scanning interface having a background picture that is a real scene image of the offline environment.

10. The device of claim 8, wherein each of the plurality of pictures includes a number of the acquired electronic certificates of the category that the picture corresponds to.

11. A non-transitory computer-readable storage medium configured with instructions executable by one or more processors to cause the one or more processors to perform the method of any of claims 1 to 7.

## Patentansprüche

1. Computerimplementiertes Verfahren zum Verteilen virtueller Objekte, Folgendes umfassend:
als Reaktion auf einen Bildscanvorgang eines Benutzers, Durchführen eines Echtzeit-Bildscannens, um ein Realszenenbild einer Offline-Umgebung des Benutzers zu erfassen;
Identifizieren eines Musteridentifizierers in dem Bild, wobei der Musteridentifizierer ein Teil der Offline-Umgebung und einem elektronischen Zertifikat mit einer Kategorie einer Vielzahl von Kategorien zugeordnet ist, wobei die elektronischen Zertifikate zum Erlangen eines virtuellen Objekts verwendet werden;
nach dem Identifizieren des Musteridentifizierers, Erfassen eines entsprechenden elektronischen Zertifikates von einem Server;
Anzeigen einer Vielzahl von Bildern, die den erfassten elektronischen Zertifikaten entsprechen, durch Überlagern und Integrieren der Vielzahl von Bildern mit dem Realszenenbild der Offline-Umgebung, wobei sich jedes der Vielzahl von Bildern an einer Position befindet, die dem Musteridentifizierer in dem Bild der Offline-Umgebung entspricht, wobei jedes der Vielzahl von Bildern einer der Vielzahl von Kategorien entspricht;
Bestimmen, ob ein Kategorie-Zählwert von erfassten elektronischen Zertifikaten einen Schwellenwert erfüllt;
als Reaktion auf das Bestimmen, dass der Kategorie-Zählwert den Schwellenwert erfüllt, Senden einer Anforderung des virtuellen Objekts an den Server; und
Empfangen, von dem Server, des virtuellen Objekts.

2. Verfahren nach Anspruch 1, ferner Folgendes umfassend:
vor dem Erfassen des Realszenenbilds der Offline-Umgebung, Anzeigen einer Aufforderung auf einer Echtzeit-Scanschnittstelle mit einem Hintergrundbild, das ein Realszenenbild der Offline-Umgebung ist.

3. Verfahren nach Anspruch 1 oder 2, wobei jedes der Vielzahl von Bildern eine Anzahl der erfassten elektronischen Zertifikate einer Kategorie einschließt, der das Bild entspricht.

4. Verfahren nach Anspruch 3, ferner Folgendes umfassend:
Anzeigen eines Teilen-Knopfs auf einem ersten Bild der Vielzahl von Bildern zum Teilen eines erfassten elektronischen Zertifikats der Kategorie, der das erste Bild entspricht; und
als Reaktion auf eine Benutzereingabe, die den Teilen-Knopf auslöst, Anzeigen einer Teilen-Schnittstelle für den Benutzer, um das erfasste elektronische Zertifikat der Kategorie zu teilen, der das erste Bild entspricht.

5. Verfahren nach Anspruch 2, wobei die Aufforderung einen Scan-Rahmen und Text einschließt, der den Benutzer auffordert, das Realszenenbild der Offline-Umgebung zu erfassen.

6. Verfahren nach Anspruch 5, ferner Folgendes umfassend: dynamisches Aktualisieren des Texts gemäß einem Ergebnis des Identifizierens des Musteridentifizierers in dem Bild.

7. Verfahren nach einem der Ansprüche 1 bis 6, wobei das elektronische Zertifikat eine virtuelle Karte ist und das virtuelle Objekt ein virtuelles Paket eines monetären Betrags ist.

8. Vorrichtung, umfassend einen oder mehrere Prozessoren und einen oder mehrere nichtflüchtige maschinenlesbare Speicher, die mit dem einen oder den mehreren Prozessoren gekoppelt und mit Befehlen konfiguriert sind, die durch den einen oder die mehreren Prozessoren ausführbar sind, um die Vorrichtung zu veranlassen, Vorgänge durchzuführen, die Folgendes umfassen:
Erfassen eines Realszenenbilds einer Offline-Umgebung eines Benutzers;
Identifizieren eines Musteridentifizierers in dem Bild, wobei der Musteridentifizierer ein Teil der Offline-Umgebung und einem elektronischen Zertifikat mit einer Kategorie einer Vielzahl von Kategorien zugeordnet ist, wobei die elektronischen Zertifikate zum Erlangen eines virtuellen Objekts verwendet werden;
nach dem Identifizieren des Musteridentifizierers, Erfassen des entsprechenden elektronischen Zertifikates von einem Server;
Anzeigen einer Vielzahl von Bildern, die den erfassten elektronischen Zertifikaten entsprechen, durch Überlagern und Integrieren der Vielzahl von Bildern mit dem Realszenenbild der Offline-Umgebung, wobei sich jedes der Vielzahl von Bildern an einer Position befindet, die dem Musteridentifizierer in dem Bild der Offline-Umgebung entspricht, wobei jedes der Vielzahl von Bildern einer der Vielzahl von Kategorien entspricht;
Bestimmen, ob ein Kategorie-Zählwert von erfassten elektronischen Zertifikaten einen Schwellenwert erfüllt;
als Reaktion auf das Bestimmen, dass der Kategorie-Zählwert den Schwellenwert erfüllt, Senden einer Anforderung des virtuellen Objekts an den Server; und
Empfangen, von dem Server, des virtuellen Objekts.

9. Vorrichtung nach Anspruch 8, wobei die Vorgänge ferner Folgendes umfassen:
vor dem Erfassen des Bildes der Offline-Umgebung, Anzeigen einer Aufforderung auf einer Echtzeit-Scanschnittstelle mit einem Hintergrundbild, das ein Realszenenbild der Offline-Umgebung ist.

10. Vorrichtung nach Anspruch 8, wobei jedes der Vielzahl von Bildern eine Anzahl der erfassten elektronischen Zertifikate der Kategorie einschließt, der das Bild entspricht.

11. Nichtflüchtiges computerlesbares Speichermedium, das mit Befehlen konfiguriert ist, die durch einen oder mehrere Prozessoren ausführbar sind, um den einen oder die mehreren Prozessoren zu veranlassen, das Verfahren nach einem der Ansprüche 1 bis 7 durchzuführen.

## Revendications

1. Procédé de distribution d'objets virtuels mise en oeuvre par ordinateur, comprenant les étapes consistant à :
en réponse à une opération de balayage d'image d'un utilisateur, effectuer un balayage d'image en temps réel pour acquérir une image de scène réelle d'un environnement hors ligne de l'utilisateur ;
identifier un identifiant de motif dans l'image, l'identifiant de motif faisant partie de l'environnement hors ligne et étant associé à un certificat électronique présentant une catégorie d'une pluralité de catégories, les certificats électroniques étant utilisés pour l'obtention d'un objet virtuel ;
après identification de l'identifiant de motif, acquisition d'un certificat électronique correspondant auprès d'un serveur ;
afficher une pluralité d'images correspondant aux certificats électroniques acquis en superposant et en intégrant la pluralité d'images à l'image de la scène réelle de l'environnement hors ligne, chacune des images de la pluralité d'images étant située à une position correspondant à l'identifiant de motif dans l'image de l'environnement hors ligne, chacune des images de la pluralité d'images correspondant à l'une des catégories de la pluralité de catégories ;
déterminer si un nombre de catégories de certificats électroniques acquis atteint ou non un seuil ;
en réponse à la détermination que le nombre de catégories atteint le seuil, envoyer une requête pour l'objet virtuel au serveur ; et
recevoir, en provenance du serveur, l'objet virtuel.

2. Procédé selon la revendication 1, comprenant en outre l'étape consistant à :
avant d'acquérir l'image de la scène réelle de l'environnement hors ligne, afficher une invite sur une interface de balayage en temps réel présentant une image de fond qui est une image de la scène réelle de l'environnement hors ligne.

3. Procédé selon la revendication 1 ou la revendication 2, dans lequel chacune des images de la pluralité d'images inclut un certain nombre de certificats électroniques acquis d'une catégorie à laquelle l'image correspond.

4. Procédé selon la revendication 3, comprenant en outre les étapes consistant à :
afficher un bouton de partage sur une première image de la pluralité d'images pour partager un certificat électronique acquis de la catégorie à laquelle correspond la première image ; et
en réponse à un déclenchement du bouton de partage par une entrée de l'utilisateur, afficher une interface de partage permettant à l'utilisateur de partager le certificat électronique acquis de la catégorie à laquelle correspond la première image.

5. Procédé selon la revendication 2, dans laquelle l'invite inclut un cadre de numérisation et un texte invitant l'utilisateur à acquérir l'image de la scène réelle de l'environnement hors ligne.

6. Procédé selon la revendication 5, comprenant en outre l'étape consistant à : mettre à jour dynamiquement le texte en fonction d'un résultat d'identification de l'identifiant de motif dans l'image.

7. Procédé selon l'une quelconque des revendications 1 à 6, dans lequel le certificat électronique est une carte virtuelle et l'objet virtuel est un paquet virtuel d'un montant monétaire.

8. Dispositif comprenant un ou plusieurs processeurs et une ou plusieurs mémoires non transitoires lisibles par une machine, couplées aux un ou plusieurs processeurs et configurées avec des instructions exécutables par les un ou plusieurs processeurs pour amener le dispositif à effectuer des opérations comprenant les étapes suivantes :
acquérir une image de scène réelle d'un environnement hors ligne d'un utilisateur ;
identifier un identifiant de motif dans l'image, l'identifiant de motif faisant partie de l'environnement hors ligne et étant associé à un certificat électronique présentant une catégorie d'une pluralité de catégories, les certificats électroniques étant utilisés pour l'obtention d'un objet virtuel ;
après identification de l'identifiant de motif, acquérir le certificat électronique correspondant auprès d'un serveur ;
afficher une pluralité d'images correspondant aux certificats électroniques acquis en superposant et en intégrant la pluralité d'images à l'image de la scène réelle de l'environnement hors ligne, chacune des images de la pluralité d'images étant située à une position correspondant à l'identifiant de motif dans l'image de l'environnement hors ligne, chacune des images de la pluralité d'images correspondant à l'une des catégories de la pluralité de catégories ;
déterminer si un nombre de catégories de certificats électroniques acquis atteint ou non un seuil ;
en réponse à la détermination que le nombre de catégories atteint le seuil, envoyer une requête pour l'objet virtuel au serveur ; et
recevoir, en provenance du serveur, l'objet virtuel.

9. Dispositif selon la revendication 8, dans lequel les opérations comprennent en outre l'étape consistant à :
avant d'acquérir l'image de l'environnement hors ligne, afficher une invite sur une interface de balayage en temps réel présentant une image de fond qui est une image de la scène réelle de l'environnement hors ligne.

10. Dispositif selon la revendication 8, dans lequel chacune des images de la pluralité d'images inclut un certain nombre de certificats électroniques acquis de la catégorie à laquelle l'image correspond.

11. Support de stockage non transitoire lisible par ordinateur, configuré avec des instructions exécutables par un ou plusieurs processeurs pour amener les un ou plusieurs processeurs à mettre en oeuvre le procédé selon l'une quelconque des revendications 1 à 7.
